# FASCICULE DE BREVET EUROPEEN

(11) **EP 3 648 976 B1**
(45) Date de publication et mention de la délivrance du brevet: **25.06.2025**
(21) Numéro de dépôt: 18752560.5
(22) Date de dépôt: 06.07.2018
(51) Int. Cl.: B41F 31/02, B29C 70/52

(54) **CORPS PRINCIPAL DE CHAMBRE À RACLES, CHAMBRE À RACLES ASSOCIÉE ET PROCÉDÉS DE FABRICATION ASSOCIÉS.**
HAUPTKÖRPER EINER RAKELKAMMER, RAKELKAMMER UND HERSTELLUNGSVERFAHREN DAFÜR
MAIN BODY OF DOCTOR BLADE CHAMBER, DOCTOR BLADE CHAMBER THEREOF AND METHODS OF MANUFACTURING SAME

(30) Priorité: 07.07.2017 FR 1756404; 28.07.2017 FR 1757253
(43) Date de publication de la demande: 13.05.2020
(73) Titulaire: Bobst Lyon, 69500 Bron (FR); Epsilon Composite, 33340 Gaillan (FR)
(72) Inventeur: BAZIN, René, 42320 Farnay (FR); FLEURY, Philippe, 69380 Saint Jean des Vignes (FR); MATTRAND, Julien, 69150 Decines-Charpieu (FR); WILLEMS, Steve Peter Daniel, 33990 Hourtin (FR)
(74) Mandataire: Germain Maureau
(86) Numéro de dépôt international: PCT/FR2018/051702
(87) Numéro de publication internationale: WO 2019/008295

(56) Documents cités:
- EP-A1- 1 805 016
- EP-A1- 2 233 391
- WO-A1-2005/090080
- FR-A1- 2 881 370
- US-A1- 2009 266 256

## Description

### DOMAINE TECHNIQUE DE L'INVENTION

La présente invention concerne le domaine technique des chambres à racles pour des groupes imprimeurs rotatifs par flexographie et plus particulièrement du procédé de fabrication d'une telle chambre à racles et du corps principal de la chambre à racle.

La flexographie est un procédé d'impression rotatif utilisable sur de nombreux supports, par exemple de type feuille ou web, en carton ou matériau plastique, et nécessitant l'utilisation de clichés, ou formes d'impression, souples et en relief.

En flexographie, un groupe imprimeur comprend un cylindre porte-cliché, configuré pour porter la forme d'impression, un cylindre tramé ou cylindre anilox, présentant sur sa surface une pluralité d'alvéoles destinées à recueillir de l'encre en quantité contrôlée par le volume des alvéoles, le cylindre tramé étant configuré pour transférer l'encre sur le cliché, une chambre à racles, configurée pour remplir les alvéoles du cylindre tramé, une pompe, assurant l'acheminement de l'encre du réservoir d'encre vers la chambre à racles, et un cylindre de contre-pression maintenant le support en cours d'impression contre le cylindre porte-cliché.

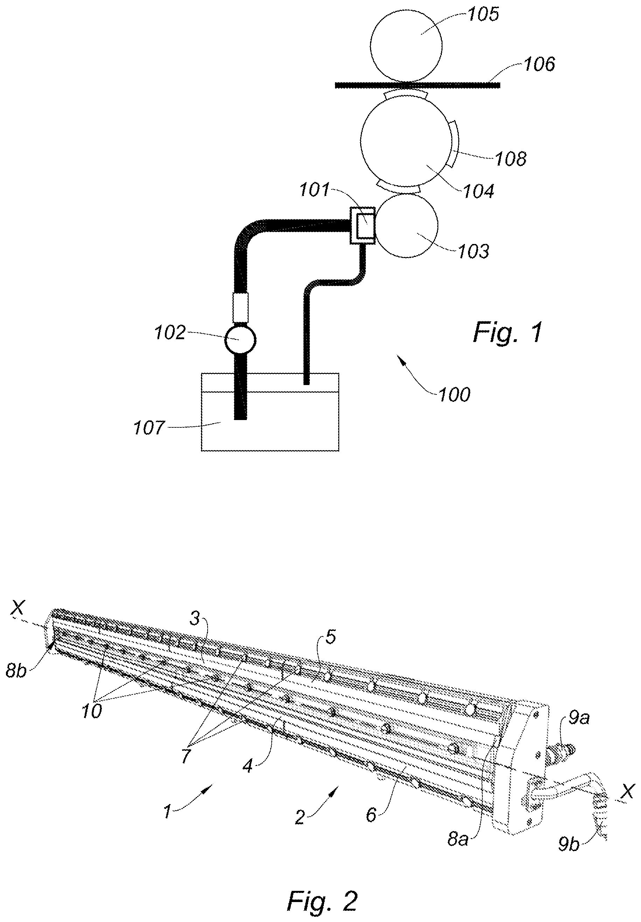

En figure 1 est illustrée cette structure de groupes imprimeurs de manière schématique. Une machine d'impression comprend plusieurs groupes imprimeurs placés les uns à la suite des autres et dédiés chacun à une couleur spécifique.

Dans la présente invention, on entend par flexographie, un procédé d'impression rotatif utilisable sur de nombreux supports et nécessitant l'utilisation de clichés, ou formes d'impression, relativement souples et en relief.

### ETAT DE LA TECHNIQUE

Classiquement, une chambre à racles est réalisée en métal, préférentiellement en aluminium, pour des questions de fabrication, les métaux pouvant être transformés par extrusion.

Cependant, une chambre à racles est un élément qui peut atteindre plusieurs mètres de long et qui est, de par son volume et le matériau utilisé pour le réaliser, lourd et difficile à manipuler et à transporter notamment lors de la maintenance : nettoyage, remplacement d'une pièce ou autre.

Le document WO 2005/090080 A1 décrit un procédé et un système de nettoyage d' une chambre à racle, où un liquide de nettoyage sous pression est pulvérisé dans la chambre par au moins une buse de nettoyage.

Pour faciliter la conception et alléger la chambre à racles, ces dernières sont souvent conçues en plusieurs pièces notamment le corps principal comme décrit dans le document WO2016192735 A1. Néanmoins, le coût de production augmente dans la mesure où le nombre de pièces augmente pour réaliser ce corps principal et la manipulation des pièces reste difficile, d'autant plus qu'au moins une opération de montage est nécessaire. En outre, les éléments de collage et d'assemblage viennent alourdir la pièce assemblée, ce qui augmente les risques liés la non-tenue et à la fatigue des jonctions assemblées. De plus, les opérations supplémentaires d'assemblage/collage baissent la productivité dans le processus de réalisation de la chambre à racles. Par ailleurs, ces pièces sont souvent réalisées en moulage par injection de résine liquide (RTM), ce qui présente les inconvénients d'obtenir des pièces dont l'épaisseur de la section est variable et dont le compactage des fibres est hétérogène.

### OBJET DE L'INVENTION

L'invention a pour but de remédier à tout ou partie des inconvénients précités.

L'invention a pour objet un corps principal de chambres à racles, tel que défini dans la revendication 1, comprenant une première portion configurée pour maintenir une première racle, une deuxième portion configurée pour maintenir une deuxième racle, une troisième portion reliant la première portion et la deuxième portion, une cavité destinée à recevoir de l'encre et délimitée au moins par la première portion, la deuxième portion et la troisième portion, tel que le corps principal est un unique profilé fermé creux s'étendant selon un axe principal longitudinal X-X, le corps principal étant réalisé en matériau composite pultrudé.

Grâce à la configuration du corps principal la chambre à racles selon l'invention, la chambre à racles est plus légère, plus robuste et résistante du fait de l'utilisation d'un matériau composite pultrudé, et la configuration en un seul profilé évite les opérations de montage/assemblage complexes et chronophages et donc coûteuses. En outre, la pultrusion permet d'obtenir des propriétés mécaniques stables et une épaisseur constante et uniforme en tous points de la section et sur toute la longueur du profilé. De plus, la pultrusion permet d'avoir une pièce, en l'espèce le corps principal présentant un taux de porosité inférieur à 2% et préférentiellement inférieur à 1%.

Dans la présente invention on entend par pultrusion, un procédé de fabrication en continu de tubes et profilés en matériaux composites.

Le corps principal peut notamment présenter une section d'épaisseur constante. Cette caractéristique est inhérente au procédé de pultrusion utilisé pour réaliser le corps principal.

Selon une caractéristique de l'invention, le matériau composite pultrudé comprend des fibres thermoplastiques et/ou des fibres d'aramide et/ou des fibres de verre et/ou des fibres de carbone haut module et/ou des fibres de carbone haute résistance. Préférentiellement, le matériau composite pultrudé est un matériau carbone composite pultrudé.

Selon une caractéristique de l'invention, le matériau composite dans lequel est réalisé le corps principal comprend un volume de fibre strictement supérieur à 60% du volume du composite. Préférentiellement, le volume de fibre est compris entre 61% et 70% du volume du composite.

Grâce à cette composition, le matériau composite pultrudé présente un module spécifique correspondant à un ratio entre le module d'élasticité longitudinal ou module d'Young du composite et la densité du composite, bien plus important que le module spécifique d'un matériau composite moulé pré-imprégné, que celui d'un matériau composite pultrudé comprenant 60% ou moins de fibres par rapport au volume du composite, et également que celui d'un matériau composite moulé par injection basse pression de résine.

Préférentiellement, le matériau composite pultrudé comprend entre 61% et 70% de fibres de carbone haute résistance par rapport au volume du matériau composite.

**Tableau 1 : exemple de résultats de module spécifique pour un matériau composite avec des fibres de carbone haute résistance en fonction de son volume de fibres dans le matériau et du procédé de fabrication utilisé.**

| **Procédés utilisés** | **volume de fibre dans le composite (%)** | **densité (Kg/m3)** | **Module de Young (KN/m2)** | **Module spécifique KNm/Kg** | **ratio de performance*** |
|---|---|---|---|---|---|
| Moulage par injection basse pression de résine | 50 | 1524 | 120 000 000 | 78740 | 100% |
| Moulage de pré-imprégné | 56 | 1558 | 130 000 000 | 83440 | 106% |
| Pultrusion | ≤60% | 1581 | 140 000 000 | 88552 | 112% |
| Pultrusion | 65 | 1605 | 149 000 000 | 92835 | 117% |
| Pultrusion | ≥70% | 1632 | 160 000 000 | 98039 | 124% |

| | | | | | |
|---|---|---|---|---|---|
| *** par rapport au moulage par injection basse pression de résine** | | | | | |

**Tableau 2 : exemple de résultats de module spécifique pour différents matériaux utilisés.**

| **Matériaux utilisés** | **Procédé utilisé** | **volume de fibre dans le composite (%)** | **densité (Kg/m3)** | **Module de Young (KN/m2)** | **Module spécifique KNm/Kg** | **ratio de performance*** |
|---|---|---|---|---|---|---|
| Matériau composite avec fibres de carbone haute résistance | Moulage par injection basse pression de résine | 50 | 1524 | 120 000 000 | 78740 | 100% |
| Aluminium | extrusion | N/A | 7850 | 205 000 000 | 26115 | 33% |

| | | | | | | |
|---|---|---|---|---|---|---|
| ***par rapport au moulage par injection basse pression de résine d'un matériau composite comprenant 50% de fibres carbone haute résistance** | | | | | | |

Comme on peut le voir dans l'exemple illustré au Tableau 1 ci-dessus, le matériau composite pultrudé comprenant plus de 60% de fibres, présente un module spécifique bien plus important que le module spécifique d'un matériau composite moulé pré-imprégné, que celui d'un matériau composite pultrudé comprenant 60% ou moins de fibres par rapport au volume du composite, et également que celui d'un matériau composite moulé par injection basse pression de résine.

Selon une caractéristique de l'invention, le matériau composite dans lequel le corps principal est réalisé par pultrusion avec un taux de fibre strictement supérieur à 60%, présente un ratio de performance supérieur à 112% par rapport au ratio de performance d'un même matériau composite en moulage par injection basse pression de résine.

Selon une caractéristique de l'invention, le corps principal comprend un textile non-tissé intégré dans la masse du corps principal et agencé affleurant à la surface extérieure du corps principal. L'intégration d'un textile non-tissé en surface du corps principal présente l'avantage de faciliter le nettoyage de la chambre à racles afin d'éviter un mélange d'une encre avec des résidus de la couleur de l'encre précédemment utilisée. En outre, le textile non-tissé permet de réduire la tension de surface des fluides et de développer les qualités du profilé du corps principal notamment en usinage et en délaminage.

Avantageusement, l'intégration du textile est réalisée en même temps que la réalisation du corps principal de la chambre à racles.

Selon une caractéristique de l'invention, le textile non-tissé est un voile d'une épaisseur comprise entre 0,05mm et 1mm.

Selon une caractéristique de l'invention, le textile non-tissé couvre au moins partiellement une partie de la surface du corps principal. Préférentiellement, le textile non-tissé couvre au moins la surface de la première portion et/ou la deuxième portion et/ou la troisième portion du corps principal. Encore plus préférentiellement, le textile non-tissé couvre toute la surface du corps principal.

Selon une caractéristique de l'invention, le textile non-tissé est un textile comprenant au moins des fibres par exemples organiques, inorganiques, thermoplastiques.

Selon l'invention, la chambre à racles comprend au moins un canal d'eau sous pression, agencé dans le corps principal. Le canal d'eau a pour fonction de servir au lavage de la chambre à racles et d'éliminer les encres résiduelles.

Selon l'invention, le canal d'eau s'étend sur au moins une partie de la longueur du corps principal, préférentiellement sur toute la longueur du corps principal. Le canal d'eau est logé dans le creux du corps principal au niveau de la troisième portion.

Selon l'invention, le canal d'eau comprend au moins une buse de lavage débouchant dans la cavité du corps principal et s'étendant en saillie depuis le canal d'eau à travers la troisième portion du corps principal.

Préférentiellement, le canal d'eau comprend une pluralité de buses de lavage. Avantageusement, les buses de lavage de la pluralité sont espacées régulièrement tout le long du canal d'eau.

Selon une caractéristique de l'invention, la troisième portion est en retrait par rapport à la première portion et à la deuxième portion du corps principal, de sorte qu'entre la première portion et la deuxième portion une cavité est formée.

Selon une caractéristique de l'invention, les buses de lavage débouchent dans la cavité formée par les première, deuxième et troisième portions du corps principal.

Selon une caractéristique de l'invention, la première racle et la deuxième racle ferment partiellement la cavité formée par les première, deuxième et troisième portions du corps principal. La première racle et la deuxième racle ont pour fonction de racler le cylindre tramé destiné à venir partiellement dans la chambre à racles.

Selon une caractéristique de l'invention, le corps principal comprend une première face destinée à être en regard au cylindre tramé, et une deuxième face opposée à la première face.

Selon une caractéristique de l'invention, le canal d'eau est positionné dans un creux du profilé du corps principal, un premier côté du canal d'eau étant agencé contre une première face intérieure du corps principal et un deuxième côté du canal d'eau, opposé au premier côté du canal d'eau étant agencé contre une deuxième face intérieure du corps principal.

Selon une caractéristique de l'invention, le canal d'eau est collé sur le corps principal. Avantageusement, le collage du canal d'eau est réalisé avec une colle expansive permettant de faire l'étanchéité. La colle utilisée pour coller le canal d'eau est par exemple une colle thermodurcissable.

Selon une caractéristique de l'invention, le canal d'eau est réalisé en matériau composite comprenant par exemple du carbone. Selon une caractéristique de l'invention, le canal d'eau est un profilé.

Selon une caractéristique de l'invention, le canal d'eau est de section transversale sensiblement rectangulaire.

Selon l'invention, la chambre à racles comprend en outre un canal d'encre, séparé du canal d'eau, s'étendant au moins partiellement le long du corps principal, préférentiellement tout le long du corps principal. Le canal d'encre a pour fonction de réaliser l'encrage du groupe imprimeur par flexographie.

Le canal d'encre est agencé dans le creux du profilé du corps principal. Avantageusement, le canal d'encre présente au moins une sortie d'encre débouchant dans le canal d'encre et s'étendant en saillie depuis le canal d'encre à travers la troisième portion du corps principal.

Selon une caractéristique, le canal d'encre est réalisé en matériau composite comprenant par exemple du carbone. Selon une caractéristique de l'invention, le canal d'encre est un profilé.

Selon une caractéristique, le canal d'encre est de section transversale sensiblement circulaire.

Selon une caractéristique, la chambre à racles comprend une première pièce d'extrémité et une deuxième pièce d'extrémité, chaque pièce d'extrémité étant agencée à une extrémité du corps principal de la chambre à racles.

Selon une caractéristique, une portion de la première pièce d'extrémité est insérée dans une première extrémité du profilé du corps principal.

Selon une caractéristique, une portion de la deuxième pièce d'extrémité est insérée dans une deuxième extrémité du profilé du corps principal.

Avantageusement, chaque pièce d'extrémité est insérée puis collée dans le corps principal.

Selon une caractéristique, la première pièce d'extrémité présente au moins un orifice conformé pour loger une canalisation reliant le canal d'eau à un réservoir d'eau.

Selon une caractéristique, la première pièce d'extrémité présente un deuxième orifice conformé pour loger une canalisation reliant le canal d'encre à un réservoir d'encre.

L'invention a également pour objet un procédé de fabrication d'un corps principal de chambres à racles, le procédé de fabrication étant caractérisé en ce qu'il comprend au moins une étape de pultrusion d'un corps principal selon l'invention.

L'invention a également pour objet un procédé de fabrication d'une chambre à racles selon l'invention, le procédé de fabrication comprenant au moins une étape d'obtention d'un corps principal selon l'invention par pultrusion.

Selon une caractéristique de l'invention, le procédé de fabrication comprend au moins une étape supplémentaire d'insertion et d'assemblage, préférentiellement par collage d'un canal d'eau conformé pour former un réseau d'eau dans le corps principal de la chambre à racles.

Selon une caractéristique, le canal d'eau est assemblé préférentiellement collé dans la cavité du profilé du corps principal et particulièrement contre la première face et la deuxième face du profilé du corps principal.

Avantageusement, la colle utilisée pour coller le canal d'eau est une colle expansible permettant de faire l'étanchéité de l'assemblage.

Le procédé de fabrication peut comprendre une étape de perçage d'au moins un orifice dans le corps principal et dans le canal d'eau, l'étape de perçage permettant le positionnement ultérieur de buses de lavage.

Le procédé de fabrication peut comprendre en outre une étape d'insertion d'un canal d'encre au sein de la chambre à racles.

Le procédé de fabrication peut comprendre une étape d'insertion et d'assemblage, préférentiellement par collage, d'une première pièce d'extrémité à une extrémité du corps principal de la chambre à racles et d'une deuxième pièce d'extrémité à l'autre extrémité du corps principal, tout en connectant la première pièce d'extrémité au canal d'eau et au canal d'encre.

### BREVE DESCRIPTION DES FIGURES

L'invention sera mieux comprise, grâce à la description ci-après, qui se rapporte à un mode de réalisation selon la présente invention, donné à titre d'exemple non limitatif et expliqué avec référence aux figures schématiques annexées, dans lesquelles les signes de références numériques identiques correspondent à des éléments structurellement et/ou fonctionnellement identiques ou similaires. Les figures schématiques annexées sont listées ci-dessous :
- la figure 1 est une illustration schématique d'un groupe imprimeur de flexographie comprenant une chambre à racles classique,
- la figure 2 est une vue en perspective de la chambre à racles selon l'invention,
- la figure 3 est une vue en perspective du corps principal de la chambre à racles selon l'invention et comme illustré en figure 2,
- la figure 4 est une vue en perspective partielle de la chambre à racles selon l'invention et comme illustré aux figures 2 et 3,
- la figure 5 est une vue de détail selon l'encadré A de la figure 4,
- la figure 6 est une vue de détail partielle de la chambre à racles selon l'invention et comme illustré aux figures 2 à 5,
- la figure 7 est une vue de côté du corps principal de la chambre à racles selon l'invention.

### DESCRIPTION DETAILLEE DES FIGURES

Comme décrit plus haut pour illustrer le contexte de l'invention, un groupe imprimeur 100 comprend :
- un cylindre porte-cliché 104 configuré pour supporter un cliché ou forme d'impression 108,
- un cylindre tramé ou cylindre anilox 103, présentant sur sa surface une pluralité d'alvéoles destinées à recueillir de l'encre en quantité contrôlée par le volume des alvéoles, le cylindre tramé 103 étant configuré pour transférer l'encre sur le cliché 10x,
- une chambre à racles 101, configurée pour remplir les alvéoles du cylindre tramé 103,
- une pompe 102 assurant l'acheminement de l'encre du réservoir d'encre 107 vers la chambre à racles 101, et
- un cylindre de contre-pression 105 maintenant le support en cours d'impression 106 contre le cylindre porte-cliché 104, et ainsi contre le cliché 108.

La chambre à racles de l'invention est désignée par la référence numérique 1 et est illustrée en détails en référence aux figures 2 à 7.

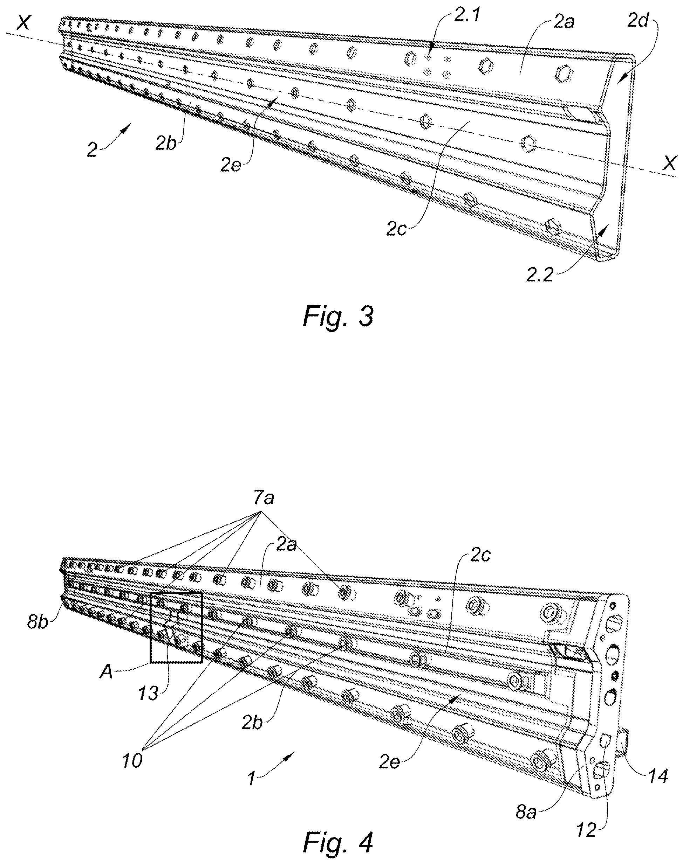

La chambre à racles 1 selon l'invention comprend un corps principal 2 réalisé en une seule pièce qui est un profilé creux fermé, comme illustré notamment en figure 3. Le corps principal 2 présente une épaisseur constante et uniforme en tous points de la section et sur toute la longueur du profilé, comme illustré notamment aux figures 3, 6 et 7. Le corps principal 2 s'étend selon un axe principal longitudinal X-X comme illustré notamment aux figures 2 et 3. En outre, le corps principal 2 est réalisé en carbone composite pultrudé.

Comme visible en figure 3, le corps principal 2 présente une première portion 2a, une deuxième portion 2b et une troisième portion 2c. La troisième portion 2c relie la première portion 2a et la deuxième portion 2b, la troisième portion 2c étant conformée et destinée à recevoir partiellement un cylindre tramé en son sein. Comme on peut le voir en figure 3, la troisième portion 2c est en retrait par rapport à la première portion 2a et à la deuxième portion 2b du corps principal 2, de sorte qu'entre la première portion et la deuxième portion une cavité 2e est formée.

En outre, le corps principal 2 présente une première face 2.1 destinée à être en regard au cylindre tramé et une deuxième face 2.2 opposée à la première face 2.1 comme illustré en figure 3.

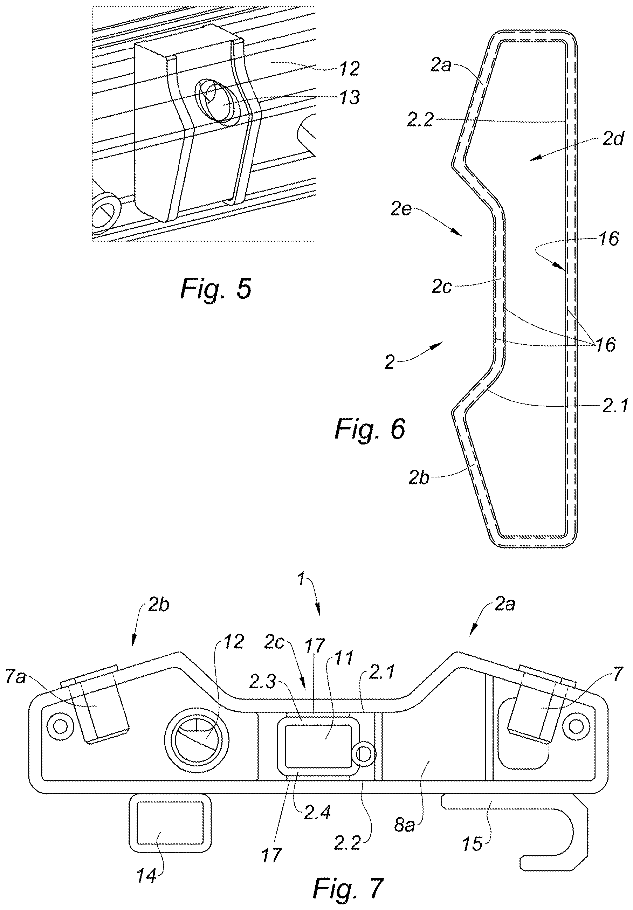

Selon l'invention, la chambre à racles 1 comprend en outre une première racle 3, la première racle 3 étant montée sur la première portion 2a du corps principal 2 au moyen d'une bride de première racle 5 comme représenté aux figures 2 et 7. Chaque bride est maintenue par un système de fixation 7 consistant en la coopération d'une vis ou un pion, visible en figure 2 avec un insert 7a et visible aux figures 4 et 7 par exemple. De plus, la chambre à racles 1 comprend une deuxième racle 4, la deuxième racle 4 étant montée sur la deuxième portion 2b du corps principal 2, en regard de la première racle 3, au moyen d'une bride de deuxième racle 6 comme représenté aux figures 2 et 7. Dans l'exemple illustré aux figures 2 et 7, la première racle 3 et la deuxième racle 4 ferment partiellement la cavité 2e formée par les première 2a, deuxième 2b et troisième 2c portions du corps principal 2.

Selon l'invention, le corps principal 2 comprend un textile non-tissé 16 agencé en surface du corps principal 2 comme représenté en trait continu sur la figure 7. Dans l'exemple illustré en figure 7, le textile non-tissé 16 est représenté comme couvrant la totalité de la surface du corps principal 2 mais, dans des variantes non représentées, le textile non-tissé pourrait ne couvrir qu'une partie du corps principal 2 par exemple uniquement la première face 2.1 ou uniquement la deuxième face 2.2 ou seulement une des portions 2a, 2b, 2c du corps principal 2.

Selon l'invention, et comme représenté notamment en figure 7, la chambre à racles 1 comprend un canal d'eau 11 sous pression, agencé dans le corps principal 2 et plus précisément dans le creux 2d du profilé du corps principal 2 au niveau de la troisième portion 2c. Le canal d'eau 11 s'étend avantageusement sur toute la longueur du corps principal 2. Avantageusement, le canal d'eau 11 est un profilé de section transversale sensiblement rectangulaire.

Comme on peut le voir en figure 7, un premier côté 2.3 partie du canal d'eau 11 est agencée contre la première face 2.1 intérieure du corps principal 2 et un deuxième côté 2.4 du canal d'eau 11, opposé au premier côté du canal d'eau 11 est agencée contre la deuxième face 2.2 intérieure du corps principal 2.

Selon l'invention, le canal d'eau 11 comprend au moins une pluralité de buses de lavage 10 débouchant dans le canal d'eau 11 et s'étendant en saillie depuis le canal d'eau 11 à travers la troisième portion 2c du corps principal 2 comme illustré aux figures 2 et 7. Dans l'exemple illustré en figure 7, le canal d'eau 11 est collé dans le corps principal 2 au moyen d'une colle 17 expansive permettant de faire l'étanchéité. Avantageusement, les buses de lavage 10 de la pluralité sont espacées régulièrement tout le long du canal d'eau 11. Comme on peut le voir en figure 7, les buses de lavage 10 débouchent dans la cavité 2e formée par les première, deuxième et troisième portions 2a, 2b ,2c du corps principal 2.

Par ailleurs, la chambre à racles 1 selon l'invention comprend un canal d'encre 12, s'étendant tout le long du corps principal 2 et agencé dans le creux 2d du profilé du corps principal 2. Le canal d'encre 12 comprend au moins une sortie d'encre 13 illustrée en figure 6 débouchant dans le canal d'encre 12 et s'étendant en saillie depuis le canal d'encre 12 à travers la troisième portion 2c du corps principal 2. Avantageusement, le canal d'encre 12 est un profilé de section transversale sensiblement circulaire.

Selon l'invention, la chambre à racles comprend une première pièce d'extrémité 8a et une deuxième pièce d'extrémité 8b, chaque pièce d'extrémité 8a, 8b étant agencée à une extrémité du corps principal 2 de la chambre à racles 1. Comme on peut le voir notamment en figure 4, une portion de la première pièce d'extrémité 8a est insérée dans une première extrémité le profilé du corps principal 2 et une portion de la deuxième pièce d'extrémité 8b est insérée dans une deuxième extrémité le profilé du corps principal 2.

Avantageusement, la première pièce d'extrémité 8a présente au moins un orifice conformé pour loger une canalisation 9a reliant le canal d'eau 11 à un réservoir d'eau et un deuxième orifice conformé pour loger une canalisation 9b reliant le canal d'encre 12 à un réservoir d'encre comme illustré aux figures 7 et 2.

Par ailleurs, la chambre à racles 1 comprend un support 14 illustré sur les figures 2 à 5 et 7 agencé sur la deuxième face 2.2 du corps principal 2 et configuré pour renforcer la chambre à racles 1. De plus, la chambre à racles 1 comprend un crochet 15 destiné à permettre l'accrochage du système de chambre à racles 1.

Bien entendu, l'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention telle que définie dans les revendications.

## Revendications

1. Corps principal (2) de chambres à racles (1) comprenant une première portion (2a) configurée pour maintenir une première racle (3), une deuxième portion (2b) configurée pour maintenir une deuxième racle (4) en regard de la première racle (3), une troisième portion (2c) reliant la première portion (2a) et la deuxième portion (2b), une cavité (2e) destinée à recevoir de l'encre et délimitée au moins par la première portion (2a), la deuxième portion (2b) et la troisième portion (2c), dans lequel le corps principal (2) est un unique profilé fermé creux s'étendant selon un axe principal longitudinal (X-X), le corps principal (2) étant réalisé en matériau composite pultrudé, **caractérisé en ce que** le corps principal (2) comprend un canal d'eau (11) sous pression, ledit canal d'eau (11) étant positionné dans un creux (2d) du profilé du corps principal (2) et s'étendant le long de l'axe principal longitudinal (X-X), ainsi qu'un canal d'encre (12) séparé du canal d'eau (11), ledit canal d'encre (12) étant positionné dans un creux (2d) du profilé du corps principal (2) et s'étendant le long de l'axe principal longitudinal (X-X), et **en ce que** le canal d'eau (11) comprend au moins une buse de lavage (10) débouchant, d'un côté, dans le canal d'eau (11) et, de l'autre côté, dans la cavité (2e), et s'étendant en saillie depuis le canal d'eau (11) à travers la troisième portion (2c) du corps principal (2).

2. Corps principal selon la revendication 1, dans lequel le matériau composite est un carbone composite pultrudé.

3. Corps principal selon l'une quelconque des revendications 1 ou 2, dans lequel le matériau composite dans lequel est réalisé le corps principal comprend un volume de fibre strictement supérieur à 60% du volume du composite.

4. Corps principal selon la revendication 3, dans lequel le volume de fibre est compris entre 61% et 70% du volume du composite.

5. Corps principal selon l'une quelconque des revendications 1 à 4, comprenant un textile non-tissé (16) agencé en surface du corps principal (2), le textile non-tissé (16) étant intégré dans la masse du corps principal (2).

6. Corps principal selon l'une quelconque des revendications 1 à 5, dans lequel le matériau composite dans lequel le corps principal est réalisé par pultrusion avec un taux de fibre strictement supérieur à 60%, présente un ratio de performance supérieur à 112% par rapport au ratio de performance d'un même matériau composite en moulage par injection basse pression de résine.

7. Chambre à racles (1) comprenant :
- un corps principal (2) selon l'une quelconque des revendications 1 à 6,
- une première racle (3) montée sur une première portion (2a) du corps principal (2),
- une deuxième racle (4) montée sur une deuxième portion (2b) du corps principal (2), en regard de la première racle (3).

8. Chambre à racles selon la revendication 7, dans laquelle un premier côté (2.3) du canal d'eau (11) est agencé contre une première face (2.1) intérieure du corps principal (2) et un deuxième côté (2.4) du canal d'eau (11), opposé au premier côté (2.3) du canal d'eau (11), est agencé contre une deuxième face (2.2) intérieure du corps principal (2).

9. Chambre à racles selon la revendication 7 ou 8, dans laquelle le canal d'eau (11) est un profilé en matériau composite comprenant du carbone.

10. Procédé de fabrication d'un corps principal (2) de chambres à racles (1), le procédé de fabrication étant **caractérisé en ce qu'**il comprend au moins une étape de pultrusion d'un corps principal selon l'une quelconque des revendications 1 à 6.

11. Procédé de fabrication d'une chambre à racles selon l'une quelconque des revendications 7 à 9, le procédé de fabrication étant **caractérisé en ce qu'**il comprend au moins une étape d'obtention d'un corps principal selon le procédé selon la revendication 10.

12. Procédé de fabrication selon la revendication 11, comprenant au moins une étape supplémentaire d'insertion et d'assemblage, préférentiellement par collage d'un canal d'eau (11) conformé pour former un réseau d'eau dans le corps principal (2) de la chambre à racles (1).

## Patentansprüche

1. Hauptkörper (2) von Rakelkammern (1), der einen ersten Abschnitt (2a), der dafür konfiguriert ist, eine erste Rakel (3) zu halten, einen zweiten Abschnitt (2b), der dafür konfiguriert ist, eine zweite Rakel (4) der ersten Rakel (3) zugewandt zu halten, einen dritten Abschnitt (2c), der den ersten Abschnitt (2a) und den zweiten Abschnitt (2b) verbindet, einen Hohlraum (2e) umfasst, der dazu bestimmt ist, Tinte aufzunehmen und mindestens durch den ersten Abschnitt (2a), den zweiten Abschnitt (2b) und den dritten Abschnitt (2c) begrenzt ist, wobei der Hauptkörper (2) ein einziges geschlossenes Hohlprofil ist, das sich entlang einer Hauptlängsachse (X-X) erstreckt, wobei der Hauptkörper (2) aus pultrudiertem Verbundmaterial hergestellt ist, **dadurch gekennzeichnet, dass** der Hauptkörper (2) einen unter Druck stehenden Wasserkanal (11), wobei der Wasserkanal (11) in einer Vertiefung (2d) des Profils des Hauptkörpers (2) positioniert ist und sich entlang der Hauptlängsachse (X-X) erstreckt, sowie einen vom Wasserkanal (11) getrennten Tintenkanal (12) umfasst, wobei der Tintenkanal (12) in einer Vertiefung (2d) des Profils des Hauptkörpers (2) positioniert ist und sich entlang der Hauptlängsachse (X-X) erstreckt, und dadurch, dass der Wasserkanal (11) mindestens eine Waschdüse (10) umfasst, die einerseits in den Wasserkanal (11) und andererseits in den Hohlraum (2e) mündet und sich vom Wasserkanal (11) durch den dritten Abschnitt (2c) des Hauptkörpers (2) vorspringend erstreckt.

2. Hauptkörper nach Anspruch 1, wobei das Verbundmaterial ein pultrudierter Verbundkohlenstoff ist.

3. Hauptkörper nach einem der Ansprüche 1 oder 2, wobei das Verbundmaterial, aus dem der Hauptkörper hergestellt ist, ein Faservolumen von strikt mehr als 60 % des Volumens des Verbunds umfasst.

4. Hauptkörper nach Anspruch 3, wobei das Faservolumen im Bereich zwischen 61 % und 70 % des Volumens des Verbunds liegt.

5. Hauptkörper nach einem der Ansprüche 1 bis 4, der einen an der Oberfläche des Hauptkörpers (2) angeordneten Vliesstoff (16) umfasst, wobei der Vliesstoff (16) in die Masse des Hauptkörpers (2) integriert ist.

6. Hauptkörper nach einem der Ansprüche 1 bis 5, wobei das Verbundmaterial, aus dem der Hauptkörper durch Pultrusion hergestellt wird, mit einem Fasergehalt von strikt mehr 60 % ein Leistungsverhältnis von mehr als 112 % in Bezug auf das Leistungsverhältnis desselben Verbundmaterials im Niederdruck-Harzspritzguss aufweist.

7. Rakelkammer (1), umfassend:
- einen Hauptkörper (2) nach einem der Ansprüche 1 bis 6,
- eine erste Rakel (3), die an einem ersten Abschnitt (2a) des Hauptkörpers (2) angebracht ist,
- eine zweite Rakel (4), die an einem zweiten Abschnitt (2b) des Hauptkörpers (2) der ersten Rakel (3) zugewandt angebracht ist.

8. Rakelkammer nach Anspruch 7, wobei eine erste Seite (2.3) des Wasserkanals (11) an einer ersten Innenseite (2.1) des Hauptkörpers (2) angeordnet ist, und eine zweite Seite (2.4) des Wasserkanals (11), die der ersten Seite (2.3) des Wasserkanals (11) gegenüberliegt, an einer zweiten Innenseite (2.2) des Hauptkörpers (2) angeordnet ist.

9. Rakelkammer nach Anspruch 7 oder 8, wobei der Wasserkanal (11) ein Profil aus Verbundmaterial ist, das Kohlenstoff umfasst.

10. Verfahren zur Herstellung eines Hauptkörpers (2) von Rakelkammern (1), wobei das Herstellungsverfahren **dadurch gekennzeichnet ist, dass** es mindestens einen Schritt der Pultrusion eines Hauptkörpers nach einem der Ansprüche 1 bis 6 umfasst.

11. Verfahren zur Herstellung einer Rakelkammer nach einem der Ansprüche 7 bis 9, wobei das Herstellungsverfahren **dadurch gekennzeichnet ist, dass** es mindestens einen Schritt des Erhaltens eines Hauptkörpers nach dem Verfahren nach Anspruch 10 umfasst.

12. Herstellungsverfahren nach Anspruch 11, das mindestens einen zusätzlichen Schritt des Einsetzens und Zusammenfügens, vorzugsweise durch Verkleben, eines Wasserkanals (11) umfasst, der dafür ausgestaltet ist, ein Wassernetz im Hauptkörper (2) der Rakelkammer (1) zu bilden.

## Claims

1. A main body (2) of a doctor blade chamber (1) comprising a first portion (2a) configured to hold a first doctor blade (3), a second portion (2b) configured to hold a second doctor blade (4) opposite the first doctor blade (3), a third portion (2c) connecting the first portion (2a) and the second portion (2b), a cavity (2e) intended to receive ink and delimited at least by the first portion (2a), the second portion (2b) and the third portion (2c), in which the main body (2) is a single hollow closed profile extending according to a longitudinal main axis (X-X), the main body (2) being made of a pultruded composite material, **characterized in that** the main body (2) comprises a pressurized water channel (11), said water channel (11) being positioned in a hollow (2d) of the profile of the main body (2) and extending along the main longitudinal axis (X-X), as well as an ink channel (12) separate from the water channel (11), said ink channel (12) being positioned in a hollow (2d) in the profile of the main body (2) and extending along the main longitudinal axis (X-X), and **in that** the water channel (11) comprises at least one washing nozzle (10) opening, on one side, into the water channel (11) and, on the other side, into the cavity (2e), and extending protruding from the water channel (11) through the third portion (2c) of the main body (2).

2. The main body according to claim 1, wherein the composite material is a pultruded composite carbon.

3. The main body according to any one of claims 1 or 2, wherein the composite material in which the main body is formed comprises a fiber volume strictly larger than 60% of the volume of the composite.

4. The main body according to claim 3, wherein the fiber volume is comprised between 61% and 70% of the volume of the composite.

5. The main body according to any one of claims 1 to 4, comprising a non-woven fabric (16) arranged on the surface of the main body (2), the non-woven fabric (16) being integrated into the mass of the main body (2).

6. The main body according to any one of claims 1 to 5, wherein the composite material in which the main body is made by pultrusion with a fiber rate strictly higher than 60%, has a performance ratio higher than 112% compared to the performance ratio of the same composite material in low-pressure resin injection molding.

7. A doctor blade chamber (1) comprising:
- a main body (2) according to any one of claims 1 to 6,
- a first doctor blade (3) mounted on a first portion (2a) of the main body (2),
- a second doctor blade (4) mounted on a second portion (2b) of the main body (2), opposite the first doctor blade (3).

8. The doctor blade chamber according to claim 7, wherein a first side (2.3) of the water channel (11) being arranged against a first internal face (2.1) of the main body (2) and a second side (2.4) of the water channel (11), opposite to the first side (2.3) of the water channel (11) being arranged against a second internal face (2.2) of the main body (2).

9. The doctor blade chamber according to claim 7 or 8, wherein the water channel (11) is a profile made of a composite material comprising carbon.

10. A method for manufacturing a main body (2) of a doctor blade chamber (1), the manufacturing method being **characterized in that** it comprises at least one step of pultruding a main body according to any one of claims 1 to 6.

11. A method for manufacturing a doctor blade chamber according to any one of claims 7 to 9, the manufacturing method being **characterized in that** it comprises at least one step of obtaining a main body according to the manufacturing method according to claim 10.

12. The manufacturing method according to claim 11, comprising at least one additional step of inserting and assembling, preferably by gluing, a water channel (11) shaped to form a water network in the main body (2) of the doctor blade chamber (1).
